# EUROPEAN PATENT SPECIFICATION

(11) **EP 4 057 587 B1**
(45) Date of publication and mention of the grant of the patent: **06.09.2023**
(21) Application number: 21161336.9
(22) Date of filing: 08.03.2021
(51) Int. Cl.: H04L 9/40, H04L 9/32, H04L 9/00

(54) **DATA STORAGE AND RETRIEVAL**
DATENSPEICHERUNG UND -ABRUF
STOCKAGE ET EXTRACTION DE DONNÉES

(43) Date of publication of application: 14.09.2022
(73) Proprietor: I-Dante Ltd, 4000 Limassol (CY)
(72) Inventor: CHIACCHIO, Ferdinando, 95125 Catania (IT); NEOCLEOUS, Dimitrios, 4000 Limassol (CY)
(74) Representative: Carpmaels & Ransford LLP

(56) References cited:
- WO-A1-2020/006350
- WO-A1-2020/036657
- US-A1- 2018 285 839
- US-A1- 2019 294 822
- US-A1- 2020 344 237
- US-A1- 2021 036 860

## Description

### FIELD OF THE INVENTION

The present invention pertains to a method of receiving and communicating user data, for example by removing user identification information associated with the user data. The present invention also pertains to a method of storing and authorising requests for access to the user data.

### BACKGROUND

Vast amounts of confidential data associated with individuals are stored in databases for numerous types of entity for a variety of different purposes. Often this data are highly confidential and associating the data with a recognisable individual in the case of a data breach could represent a fundamental data breach which could contravene national and international data protection laws. At the same time, it is desirable to be able to provide access to the user data to certain third party entities, either anonymously or such that it is known to be associated with a given individual. Moreover, the individual to whom the data is associated may wish to access the data securely to ensure that it has not been tampered with. As such it is desirable to be able to store an immutable version of the data such that differences between the user data can be validly checked and confirmed, and for this a public record of the data could be desirable, e.g. via use of blockchain storage. However, storing such an immutable copy on a public storage system would also currently mean recognisably associating the data with the individual to whom it is associated, thus presenting a data security risk which itself may also be a contravention of data protection.

Moreover controlling access to the data effectively means that that there is a requirement for providing an immutable record of access to the data. Again, to make this immutable, a public record of the data could be desirable, e.g. via use of blockchain storage. However, storing such an immutable record of the data acesss for a given user on a public storage system would also currently mean recognisably associating the user access request with the individual to whom it is associated. This would represent an additional data security risk which again may also be a contravention of data protection.

It is thus desirable to provide a data storage and retrieval process and system which mitigates the aforementioned problems whilst also being highly secure and efficient in terms of data processing time. In particular, such a data storage and retrieval process is useful in sectors where data confidentiality is paramount, but where additionally it is desirable for confirmed third parties to have access to user data when authorisation has been given by the individual to whom the data is associated. By way of example, such sectors may include the government, financial and healthcare sectors, particularly for confidential financial data or patient data, e.g. patient medical records.

WO 2020/036657 A1 discloses methods, systems, and media that leverage blockchain technology and cryptography implemented on decentralized or distributed peer-to-peer networks to provide reliable and secure verification of data integrity.

### SUMMARY

The invention is defined in the appended claims. In one aspect, there is provided a computer-implemented method of receiving and communicating data using a data processing hub, the data processing hub includes a processor, the method includes the steps of receiving a first set of user data from a first data repository, the first set of user data having been requested by an entity, where the first set of user data includes an repository user identifier, removing the repository user identifier in the first set of the user data to generate a second set of the user data, creating a hash of the second set of user data, retrieving a hash of a third set of user data from a storage system, comparing the hash of the second set of user data to the hash of the third set of user data and, in the event that the hash of the second set of user data is identical to the hash of the third set of user data, communicating the first set of user data to the entity.

The entity may be a user device associated with a given user. According to the above method of the invention, the first set of user data can be communicated to the entity only in the event that an anonymised version of the user data matches a stored anonymised version of that user data, thereby confirming that there is no tampering of the records.

The data processing hub may further include the storage system from which the third set of data is retrieved. This provides for local data retrieval, rather than cloud based retrieval, which is faster and more resilient.

The method may further include the steps of receiving, from the entity, a request for the first set of user data, and relaying the request for the first set of user data to the first data repository. This provides for efficient data processing and retrieval since the processing hub itself distributes requests.

The request for the first set of user data may include a hub user identifier. This means that data access requests can be tracked at a user level via the hub.

The data processing hub may also include a user database (user data storage) linking the hub user identifier with the repository user identifier, and optionally, this user database is encrypted. As such the requesting entity's identity can be linked to the repository's user data. Along with encryption utilised with the database, this prevents any malicious attempt against associating the repository user identifier with the hub user identifier.

The removing of the repository user identifier in the first set of the user data to generate a second set of the user data may further include adding an alternative user identifier. This means that any potentially known identifier of the first repository can be switched for an alternative identifier at the data processing hub.

The alternative user identifier may include a function of the hub user identifier.

The alternative user identifier may further include a function of a token. The token is individual to an entity. This means that a known identifier at first repository can be switched for an alternative identifier that is dependent on both the hub user identifier and the local token, such replacement ensuring that the user data records are decoupled from the repository user identifier.

The retrieving of a hash of a third set of user data from the storage system further may include searching a database on the data processing hub for a copy of a record associated with the hash of the third set of user data, where that record has been stored on a public storage system, and optionally, the public storage system may be on a blockchain. This ensures that there is a local record on the local storage system which is also stored on the blockchain, and thus there exists an immutable copy of the record.

The correspondence of the record with the hash of the first set of user data can be determined using the alternative user identifier.

The entity (user device) may correspond to the user responsible for generating the first set of user data (i.e. the data owner), or the entity may correspond to a third party entity / user requiring access to the data.

In the event that the hash of the second set of user data is not identical to the hash of the third set of user data, there may further be a step of providing an indication that the records are not identical, and optionally, providing the indication that the records are not identical to the entity making the request for the first set of user data. The recipient of the indication is made aware that a record has been tampered.

In the event that the hash of the second set of user data is not identical to the hash of the third set of user data, the method further includes the step of preventing communication of the first set of user data to the entity. This ensures that any tampered record (first set of data) is not communicated to entity.

One or more of the first set of user data, the second set of user data and/or the third set of user data may include a medical record belonging to the user, and/or a lab test result belonging to the user.

In a second aspect, there is provided a data processing hub for receiving and communicating data, the data processing hub includes a processor configured to execute the steps of the aforementioned method.

In a third aspect, there is provided a computer-implemented method of mediating the sharing of data between a data owner and a third party using a data processing hub, the data processing hub including a processor. The method includes the steps of receiving, from the data owner, a first record including an indication of whether authorization to access data belonging to the data owner is to be granted, the indication being made in response to a request from the third party for access to the data belonging to the data owner. The computer-implemented method also includes creating a hash of the first record including the indication. The computer-implemented method also includes storing the hash on a public storage system. In the event that the received first record includes an indication to authorise access to the data providing a notification to the third party that access to the data is authorized.

By the above method, a permanent record of the indication of the authorization to access data is created on a public storage system. As a consequence, a public record of positive or negative indications created.

In some instances, in the event that the received first record includes an indication not to authorise access to the data, the method denies the third party access to the data. This provides for an explicit denial and prevention of access to user data when not authorised.

it may further be that when the received first record includes an indication not to authorise access to the data, a notification to the third party that access to the data is denied is provided.

The method may further include the steps of receiving the request from the third party to provide the data belonging to the data owner, and relaying the request to the data owner. This provides for processing efficiency via a central processing hub which is the hub for distributing the data access requests.

The request may also include one or more of a request identifier, an identity of the third party, an identity of the third party's organisation, and a date of the request, an indication of the duration of access. Optionally, one or more of the above may be encrypted, and/or may be hashed

The method may further include the step of storing, on a local record database of the data processing hub, one or more of the first record includes the indication, and the hash of the first record includes the indication. This means that the hub maintains a record of the authorizations locally for fast access; this being easier to examine than a public storage system.

One aspect further includes the step of storing the request on a local request database of the data processing hub. As a result, a local record of the requests is kept to provide fast access, the local record being easier to examine than a public storage system

The method may further include the step of receiving a second record from the public storage system indicating that the hash has been stored to the public storage system. This ensures that the hub is able to receive an indication that the hash has successfully been stored, the second record representing that this is the case. The second record may be a transaction ID.

The method may further include the step of storing the second record and the associated request in a local database of the data processing hub. This ensures that the transaction ID is stored locally alongside the request. The hash may be retrieved from either the public storage system, or the local database, using the second record.

The method may further include the step of storing the first record and the associated second record in a local database of the data processing hub, or the hash of the first record and the associated second record in a local database of the data processing hub. This means that the pair of the transaction ID and hash are stored locally which provides for faster processing within the hub to see whether the hash matches the hash stored on the chain.

There is also provided a step of granting access to the data belonging to the data owner in response to an indication that access to the data is to be granted. This ensures that, based on notification of access to the data, access is then granted.

The data belonging to the data owner is secure data, for example it may include one or more of a medical record belonging to the data owner, a lab test result belonging to the data owner, financial data of the data owner. The public storage system may be blockchain. This provides for immutability on a public record of indications. One or more of the first record, the hash of the first record, the second record, the request, the data belonging to the data owner, the indication, and the notification may be stored and/or transmitted in encrypted form.

The step of creating a hash of the first record comprising the indication may further comprise appending a further portion to the first record that is not hashed. The step of storing the hash on a public storage system may further comprise storing the appended portion on the public storage system alongside the hash. In some instances, that portion is a timestamp, and optionally, the timestamp is one or more of the timestamp of the request, the timestamp of the acceptance/refusal of the request, and/or the timestamp of the expiration of access to the data. In some instances, portions of the first record are hashed, whereas other portions of the first record are not hashed or encrypted. The hashing non-hashing and encryption/ non-encryption of portions of the record reflects the relative security of these portions of the request, and leaving portions unhashed and unencrypted saves the computational resources of needing to hash or encrypt that data, improving performance. Storing non-hashed and/or non-encrypted portions alongside the hash of the first record may provides access to the information stored in that portion, without compromising the security of the information stored in the hash.

In a fourth aspect, there is provided a data processing hub for mediating the sharing of data between a data owner and an third party, the data processing hub includes a processor configured to execute the steps of the method of the third aspect.

In a fifth aspect, there is provided a computer-readable medium which includes instructions that, when executed, cause a processor to perform any one of the methods.

In a sixth aspect there is provided a computer program product that includes instructions that, when executed, cause a processor to perform any one of the above methods.

### BRIEF DESCRIPTION OF THE DRAWINGS

The present invention is described by way of example with reference to the accompanying drawings in which:
FIG. 1 illustrates the data processing system of the invention.
FIG. 2 illustrates an aspect of the subject matter in accordance with one embodiment.
FIG. 3 illustrates a user device according to the invention.
FIG. 4A illustrates a first data flow according to the invention.
FIG 4B illustrates a second data flow according to the invention.
FIG. 5 illustrates a first method according to the invention.
FIG. 6 illustrates a third data flow according to the invention.
FIG. 7 illustrates a second method according to the invention.

### DETAILED DESCRIPTION

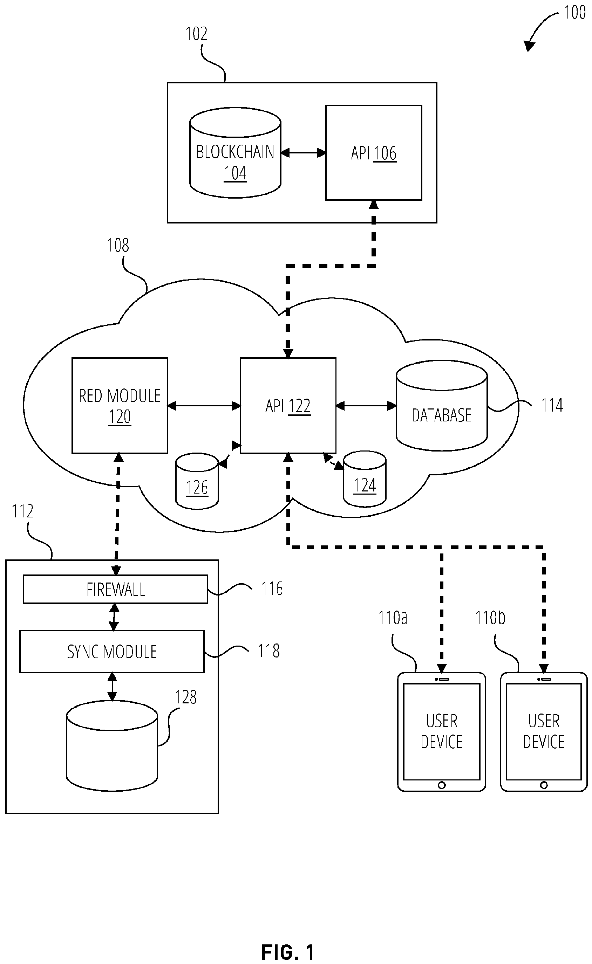

In FIG. 1, there is depicted a data processing system 100 which comprises a blockchain server 102, including a blockchain storage 104 and a blockchain API 106, a data processing hub 108, a first user device 110a, second user device 110b and a data repository 112. The data processing hub 108 provides a hub storage 114, a redistribution module 120, a hub API 122, and a user data storage 124.

The data repository 112 comprises repository storage 128 in communication with synchronisation module 118 and then via firewall 116 to the data processing hub 108. The data processing hub 108 may be located in a cloud server on the Internet and communication between blockchain server 102, data processing hub 108, user device 110a and first data repository is via secure communication, e.g. https, over the Internet.

The data repository 112 is under the control of an entity to whom a user has given permission to store and maintain confidential user data. In this regard, the data repository 112 stores the user data alongside a repository user identifier in repository storage 128. Requests for user data of a given user based on a received repository user identifier are processed by synchronisation module 118 which is configured to lookup the user data based on the received repository user identifier. This all happens securely behind firewall 116 which ensures that only authorised entities are permitted access to the user data.

The data processing hub 108 may be one such authorised entity which is configured to perform user data lookup in the data repository 112. To ensure that there is an immutable version of the user data (for future data validation purposes), the redistribution module 120 is authorised for access to the data repository 112 and also to blockchain server 102. The redistribution module 120 is configured to obtain user data with the repository user identifier from the data repository 112, and then place the obtained user data on the blockchain storage 104 (on the blockchain, e.g. public blockchain) in anonymised form, i.e. without the repository user identifier included with the user data. Since the blockchain does not contain user identification information, the identity of the user associated with the data is not recorded on the blockchain, hence the data is inherently secure. The data processing hub 108 is configured to manage the data requests as outlined below to ensure that user data can be identified and checked for tampering.

A given entity, either a third party entity or the user themselves, is permitted to access the user data when a valid association with the user data and entity has been stored in user data storage 124. Access to the user data is provided via the user device 110a, which is associated with the user themself or with an authorised third party entity. Access to and processing of the user data via the data processing hub 108 and blockchain server 102 is managed via hub API 122 and blockchain API 106.

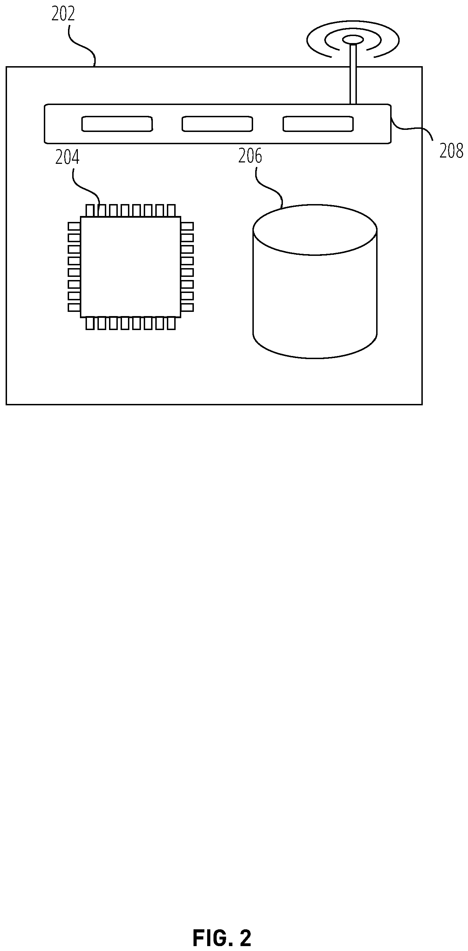

The data processing hub 108, blockchain server 102 and data repository 112 are implemented by way of one or more server devices, such as server 202 depicted in FIG. 2. The server 202 comprises a server processor 204, a server memory 206, and a server communications interface 208. These components may be implemented in a cloud service, in a virtual or dedicated implementation and may be distributed. The server memory 206 means one or more storage devices, such as hard drive storage, and/or semiconductor memory.

The server communications interface 208 receives and sends data and associated data requests to/ from the server processor 204 and server memory 206 over a wide area network, such as the Internet. This data transmission is in a secure form and is typically encrypted.

The server memory 206 stores computer executable instructions for performing the associated server functions, and in particular for performing the processes of the invention described herein.

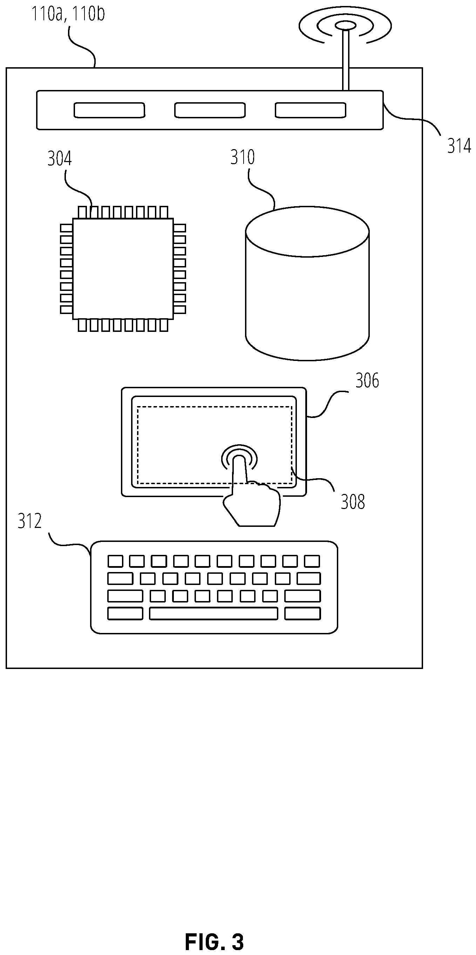

According to FIG. 3, user device 110a, which is associated with a given user or third party entity comprises: a processor 302, a display 304, (and optionally a touch sensitive input device 306 integrated with display 304), a memory 308, a user input device 310, and a communications interface 312. Additionally, there may be a second user device 110b associated, for example, with a data owner; this second user device 110b being constructed as per user device 110a.

The communications interface 312 is adapted to communicate data requests to/from the data processing hub 108 over a wide area network, such as the Internet. Such communication may be wired or wireless. The processor 302 then receives validly authenticated user data and displays it on display 304 and stores it in memory 308. Requests for data and user authentication are made via user input device 310 or optionally the touch sensitive input device 306. The user device 110a is associated with a given user and can receive user input to authenticate the user such that the user device 110a is associated with a given user of the user data or an authenticated third party entity.

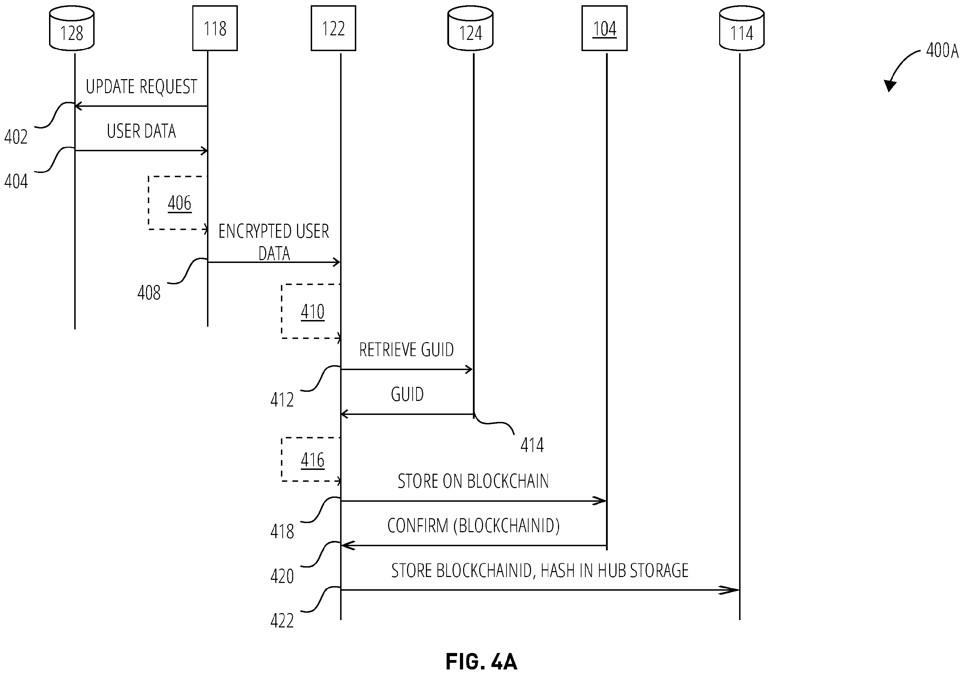

FIG. 4A depicts a first data flow 400A of user data for establishing up-to-date anonymized records on the blockchain. The flow 400A takes place between blockchain storage 104, hub storage 114, repository storage 128, synchronisation module 118, hub API 122, user data storage 124 and blockchain API 106.

As a first step of the process, the synchronisation module 118 checks (for example, periodically or on demand) for user data updates with a data request 402, and if one or more update(s) has occurred, then user data 404 is transmitted from repository storage 128 via the synchronisation module 118, which encrypts 406 the user data 404 to generate encrypted user data 408 and transmits the encrypted data via redistribution module 120 to hub API 122 in data processing hub 108. The hub API 122 decrypts 410 the encrypted user data 408 and removes the repository user identifier, thereby anonymizing the data.

Based on the repository user identifier extracted, the hub API 122 retrieves 412 an alternative user identifier, such as a globally unique identifier 414 from user data storage 124, the user data storage including a table that relates the repository user identifier to the globally unique identifier (GUID).

In greater detail, the globally unique identifier (GUID) is a stored identifier of an entity that is generated from the combination of a hub user identifier (also known as a `log on' or an 'account' at the hub) and a third party token that identifies the entity. Such tokens are produced, for example, from the B2C system within Microsoft's Azure service. Both the hub user identifier and the third party token are generated when an entity first 'signs up' or 'logs on' to use the data processing system 100, as part of the set up or log on process.

Once the repository user identifier has been removed, the GUID is associated with the anonymised user data, and the anonymised user data is encrypted 416, then it is hashed and stored 418 on blockchain storage 104. A confirm message 420 with a blockchain ID is transmitted via blockchain API 106 to hub API 122.

Upon receipt of the confirm message 420 with a blockchain ID, the hub API 122 is now aware that an immutable record of the hashed anonymized user data has been stored. A hashed copy of the record (the hash of the third set of user data of the invention) that is identical to the hash stored on blockchain storage 104 is also stored 422 in hub storage 114 alongside the received blockchain ID. Separately (not shown), the blockchain ID is stored in hub storage 114 in association with the GUID. Thus, for a given GUID, the corresponding blockchain IDs and hashes for the immutable record can be later identified and obtained on the basis of the GUID.

Further, both the data processing hub 108 and the blockchain storage 104 each contain an anonymised version of the user data. The third set of user data will subsequently be compared to the hash of a second set of user data (explained below), so as to check whether second set of the user data is identical to the third set of user data stored in the hub storage 114.

If a local record of the hash is stored in hub storage 114, the identity of the record may be checked (such as on demand, or periodically) with the corresponding record in the blockchain storage 104 at any point once the immutable record has been stored on the blockchain using the blockchain IDs. If the records are identical and the local record of the hash stored on hub storage 114 is identical to that stored on the blockchain storage 104, then no tampering has occurred with the local record. This record validation process may happen periodically, on demand, and may happen at any point during a data retrieval process, including as a step in the data retrieval process outlined below.

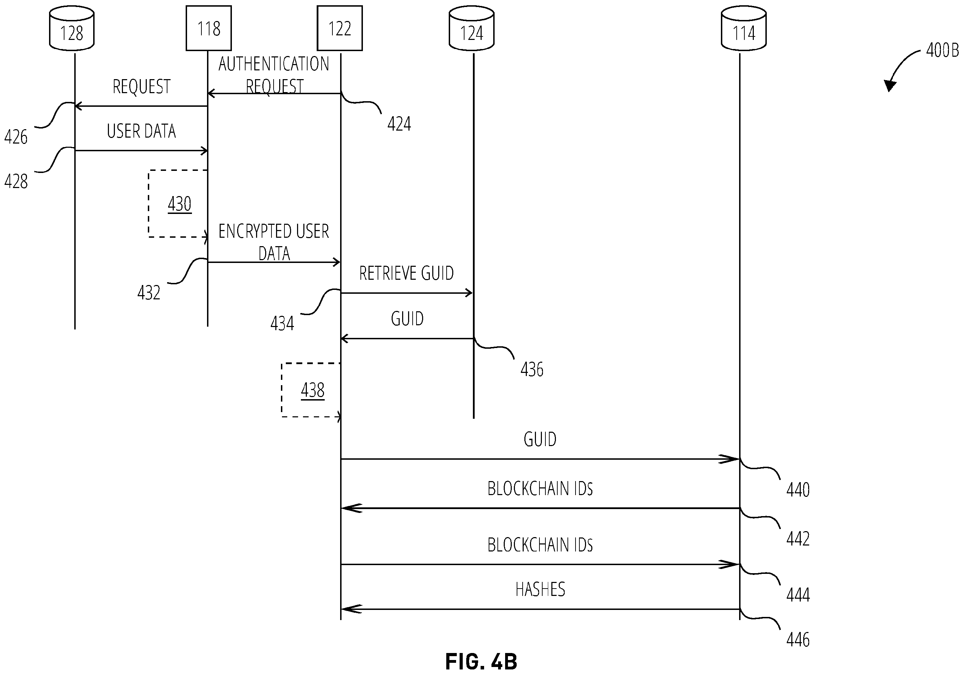

Fig. 4B depicts a second data flow 400B of user data according to the invention and illustrates the process of producing the second set of user data. The flow 400B takes place between, hub storage 114, repository storage 128 synchronisation module 118, hub API 122, and user data storage 124. The data flow is similar to that of Fig. 4A, but instead of the data synchronization module 118 checking for updates to the data stored on repository storage 128, the data synchronization module 118 instead responds to a request to retrieve a user's data,

First, a retrieval request for a user's data is received at hub API 122 (not shown), the retrieval request including a token from the user device 110a identifying the requester, alongside the hub user identifier associated with the requester's log-on or account. The requester may be the data owner who owns the user data themselves, or a different entity.

If the data owner is making the retrieval request, as identified by the token from user device 110a, or by the owner's GUID (which can be determined from the combination of the data owner's hub user identifier when he or she logs on, and the token from user device 110a), the data owner is naturally authorized to access its own user data. In such circumstances, the hub matches the data owner's hub user identifier with a corresponding repository user identifier, and a data retrieval request 424 including the associated repository user identifier is communicated from hub API 122 to synchronization module 118.

If an entity other than the data owner is making the retrieval request, as identified by the entity's token, or by the entity's GUID (which can be determined from the combination of the entity's hub user identifier when the entity logs on, and the token from user device 110a), then the communication is contingent on the requesting entity having authorization to request the data owner's repository user identifier (and correspondingly, to retrieve the associated data), and a check for such authorization is performed. To perform the check, the entity's GUID is checked in sharing database 126 to see whether there is an indication in that database 126 that the entity's GUID has been authorized to access the data owner's data, on the basis of the entity's GUID being paired with the data owner's GUID. If authorization has been granted, then a search of the hub user data storage 124 occurs on the basis of the owner's GUID to find the corresponding repository user identifier, which is stored with the data owner's GUID on hub user data storage 124. Once the repository user identifier is found, a data retrieval request including the repository user identifier is communicated from hub API 122 to synchronization module 118. The process by which the entity requests access to the user data (such that the pairing of the GUIDs on sharing database 126 may occur) is explained in further detail below.

The synchronization module 118 is able to retrieve the requested records from the repository storage 128 on the basis of the repository user identifier included in the communicated request. The synchronisation module 118 checks for user data in the repository storage 128 having the matching repository user identifier with a data retrieval request 426, and then user data 428 (a first set of user data) is transmitted from repository storage 128 via the synchronisation module 118 which encrypts 430 the user data 428 to generate encrypted user data 432 and transmits the encrypted data via redistribution module 120 to hub API 122 in data processing hub 108. The hub API 122 decrypts the encrypted user data 432 and removes and obtains the repository user identifier, thereby also anonymizing the data.

Based on the repository user identifier obtained and associated with the data retrieved, the hub API 122 retrieves 434 the corresponding GUID (the alternative user identifier, in this instance the GUID of the data owner) from user data storage 124. The data owner's GUID is associated with the anonymized user data, and the anonymised user data (the second set of user data) is encrypted 438, then it is hashed, and is held temporarily on the hub.

Alongside or shortly after communicating the request to data synchronization module 118 to retrieve the first set of user data (such that the second set of user data may be generated therefrom), hub API 122 also retrieves 440, from the hub storage 114, the blockchain IDs 442 that are associated with the GUID of the data owner, and then uses those retrieved blockchain IDs to retrieve 444 the hashes 446 (the hashes of the third set of user data). The retrieval of the hashes may be from those stored in the hub storage 114 that are associated with those blockchain IDs, the hashes having been stored during the update process outlined previously in respect of Fig. 4A above, or may be the hashes stored on the blockchain storage 104 itself, which are also identifiable based upon the respective blockchain IDs.

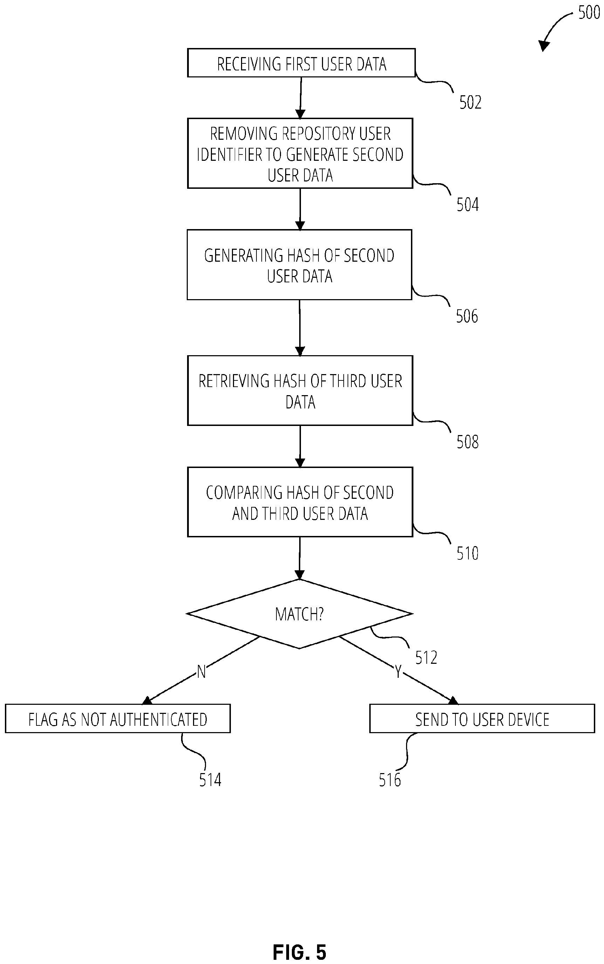

Once the second set of user data has been retrieved and hashed, and the hash of the third set of user data has been retrieved from the storage system, these two sets of data can then subsequently be compared so as to check whether second set of the user data temporarily held on the hub corresponds with the third set of user data from either hub storage 114 or blockchain storage 104. This comparison process is outlined below in relation to FIG. 5

In one or more of the above processes, the hash generated and stored is a unique value of fixed size representing a large amount of data. For example, it could be obtained with a SHA-256 Cryptographic Hash Algorithm applied to successive sets of the second set of the user data, which returns strings of 64 hex characters length of 32 byte.

FIG. 5 depicts a process 500 according to the invention for data retrieval and validation.

In step 502 of process 500, a first set of user data is received from data repository 112 based on a retrieval request for that user data using a corresponding repository user identifier.

The corresponding repository user identifier and user data are determined based on the association between the repository user identifier and a hub user identifier in the hub user storage 124.

In step 504 of process 500, repository user identifier is removed from first set of the user data received from data repository 112 to generate second user data. The generation may include associating the GUID associated with the repository user identifier, that GUID being retrieved from the user data storage 124 on hub 108.

In step 506, a hash of the second set of the user data is generated and temporarily stored by data processing hub 108.

In step 508, the previously stored hash of the user data stored in the hub storage 114 is requested and received, or the previously stored hash stored on the blockchain storage 104 itself is requested and received. Either request is made based on sending the blockchain ID(s) which have been obtained via a look up table/database in the user data storage 124, the Blockchain ID(s) being identified using the GUID for the user to whom the data belongs (i.e. the data owner). As disclosed above, if a local record of the hash is stored in hub storage 114, the identity of the record may be checked with the corresponding record in the blockchain storage 104 as an optional extra step.

In step 510, the received third set of user data from the storage 114 is compared to the hash of the second set of the user data previously generated from the first set of the user data.

In decision step 512, if there is an identical match between the two hashed data sets, then it can be said that the first set of user data has not been tampered with and in step 516, the first set of the user data can be sent to the user device 110a, or a non-tampering indication can be sent to the user device 110a.

Alternatively, in step 514, if the two hashed sets of data do not match then a non-authentication flag can be sent to the user device 110a.

In view of the above described processes, it can be seen how the blockchain storage 104 can be utilised efficiently and effectively in an anonymous fashion (without user identification being present on the blockchain) to perform data validation of the first set of the user data via the data processing hub 108.

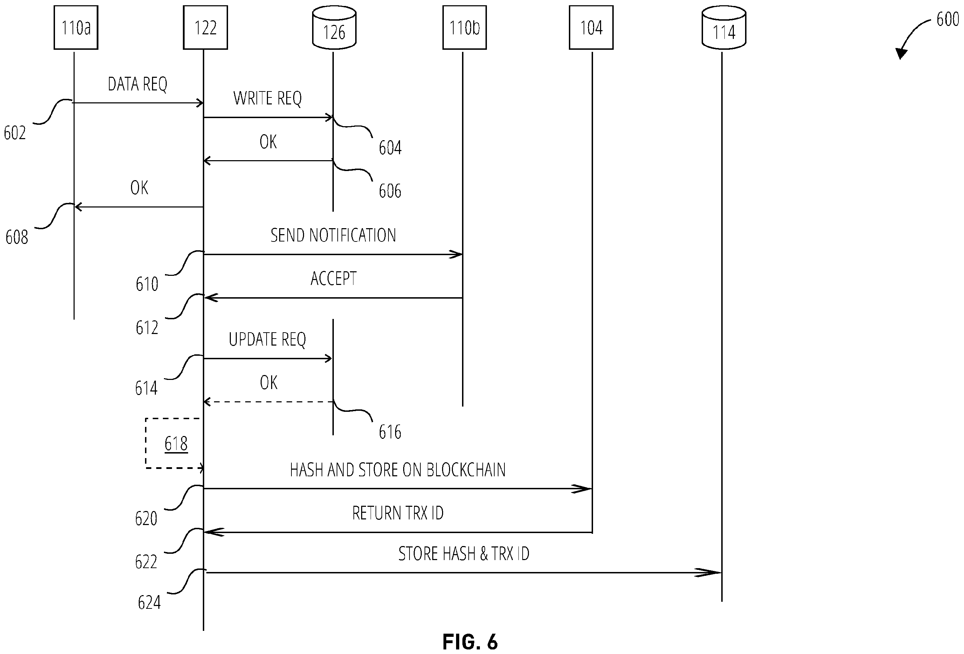

FIG. 6 depicts a second data flow 600 through which a data owner may control access by a third party entity to user data. The control of the access to the data with the data processing system 100 occurs via a data request flow according to the invention. The flow 600 takes place between third party user device 110a, hub API 122, sharing database 126, data owner user device 110b, blockchain storage 104 and hub storage 114.

In the following process, an entity, who may be a third party, operates the user device 110a to access user data. The user data that is accessed is 'owned' by a different entity (the data owner).

Initially, the third party user device 110a transmits a request for access to a particular set of user data accessible by the data processing hub 108, e.g. the first set of user data mentioned above. This data is "owned" by data owner who has access to a second user device 110b. The request for access is written, alongside a request timestamp, by hub API 122 to sharing database 126 In response, sharing database 126 provides an OK message 606 comprising a unique RequestID and the timestamp (the timestamp of the request) as an acknowledgement of the request, back to hub API 122 and a further OK message 608 is relayed by Hub API 122 to the third party user device 110a.

The hub API 122 then sends a send notification message 610 to the user device 110b of the data owner. The device 110b is configured to display a notification to the data owner requesting confirmation as to whether access to the user data is authorised. The send notification message 610 may comprise an indication of the set of user data which is to be accessed and the identity of the entity (i.e. the identity of the third party) requesting such access.

The notification is only accessible to the corresponding data owner via a user validation process (not shown) which validates that the data owner is the user accessing the user device 110b. The validation of the data owner as being the user responding to the notification may be on the basis of a token that stored on user device 110b, such tokens being generated when the data owner 'signs up' or 'logs on' (or an equivalent process) to use the data processing system 100, as part of the set up or log in process. In one example, the token may be provided by the B2C system within the Microsoft Azure service.

If, in response to the notification, the data owner wishes to authorize access, the data owner provides authorisation via user device 110b that the set of user data is authorised for access, then an accept message 612 is transmitted in response from user device 110b to hub API 122, alongside a timestamp of authorization and a timestamp of the expiration of that access if appropriate. The access that is provided by the data owner may be indefinite, or may be time limited. In some instances, the data owner may provide partial access to the requested data, but refuse access to other parts of the data.

If, in response to the notification, the data owner wishes to deny access, the data owner provides a denial via user device 110b that the set of user data is not authorised for access, then an refusal message 612 is transmitted in response from user device 110b to hub API 122, alongside a timestamp of refusal.

In situations where the user permits partial access, message 612 may outline the portions of the data that for which access is authorized and the portions of the data for which access is refused. The message 612 may include partial denials and partial authorizations. In this instance, the timestamp of refusal/authorization are one and the same, and for the authorization, a timestamp of expiration is also provided.

In order to ensure that there is an immutable record which can later be checked for mediating user data access, a number of events now happen. Firstly, confirmation of the outcome of the request is written via an update request 614 to sharing database 126, including the timestamps of acceptance and expiration if appropriate. Whilst the confirmation can be written as an independent entry in the sharing database 126, preferably, the confirmation is written as an update to the previous record of the request, i.e. as an update to the previous write request 604 that already includes the RequestID and the timestamp of the request. As a result, the Request that has been validated by the data owner, alongside the timestamps of the request, the authorization and the expiration (or the request and the timestamps of the request and the refusal) are written to the data record in sharing database 126.. Optionally, the nature of the authorization (e.g. the extent of the authorization, such as full authorization, or partial authorization or refusal of authorization) may also be written to the database. Once the writing is complete, an OK message 616 is provided in response.

Secondly and in parallel or shortly after the outcome of the request is written to the sharing database 126, the RequestID is then hashed in step 618 (the hashing may occur after the RequestID has been encrypted, but such encryption is optional). Once hashed, the hash of the RequestID, alongside the timestamps of the request, and either the authorization and expiration, or the refusal, are stored in blockchain storage 104 via store process 620, which is executed by hub API 122. The blockchain ID (TRX ID) is returned from blockchain API 106 confirming the blockchain storage of the hashed (and optionally encrypted) RequestID and the associated timestamps. Blockchain API 106 confirms the storing with message 622, which includes the blockchain ID (TRX ID) of the storage process. The blockchain ID (TRX ID) and the hash of the RequestID and the associated timestamps are then stored in hub storage 114 (store HASH and blockchain ID (TRX ID) in hub storage 624).

Once again, the hash utilised above may be based on an SHA-256 Cryptographic Hash Algorithm.

Whilst the RequestID is hashed and is therefore unreadable, the timestamps of the request, authorization, expiration and refusal are stored without hashing on the blockchain storage 104 (possibly as plaintext). As a result, the timestamp information is available to entities that interrogate the blockchain storage 104. Whilst providing some information unhashed might seem undesirable, since the timestamps need not be hashed, no computing resources need be devoted to calculating the hashes of the timestamps, thereby saving computational effort.

The choice to leave such information unhashed reflects the relative significance of the sensitivity of the information contained in each of the RequestID and the associated timestamps, and recognizes that from an information security point of view, the timestamps are less useful data to a (potentially nefarious) third party interrogating the blockchain storage 104, whereas the RequestID might be used to retrieve more sensitive user data, whilst the former is simply a sequence of two or three timestamps. As a result of this recognition, computational effort is saved despite the minor decrease in information security.

In other contexts computational effort is also saved. As a result of providing the sequence of two or three timestamps in plaintext, information regarding the records is available to other third parties that are monitoring the authorization process by inspecting the blockchain storage 104 (interfacing the with the blockchain API 106). This has several advantages. First, such a third party is not required to expend computational effort in unhashing the timestamp data to interpret that data. Second, the third party may retrieve the timestamp data without interfacing with hub API 122, thereby reducing the number of simultaneous connections that need to be made to the hub 108, improving the performance of the hub. Each of these benefits arises without compromising the immutability or the security of the requests and the information contained therein, including the requestIDs.

One example use by a monitoring blockchain storage 104 third party would be to keep track of the number of requests for data in order to be able to calculate the number of authorizations and denials. By inspecting the timestamps a third party may identify whether repeated unsuccessful requests are being made, which may occur in a form of denial-of-service attack on the system 100, where a further (nefarious) third party seeks to send a profusion of requests to any data owner.

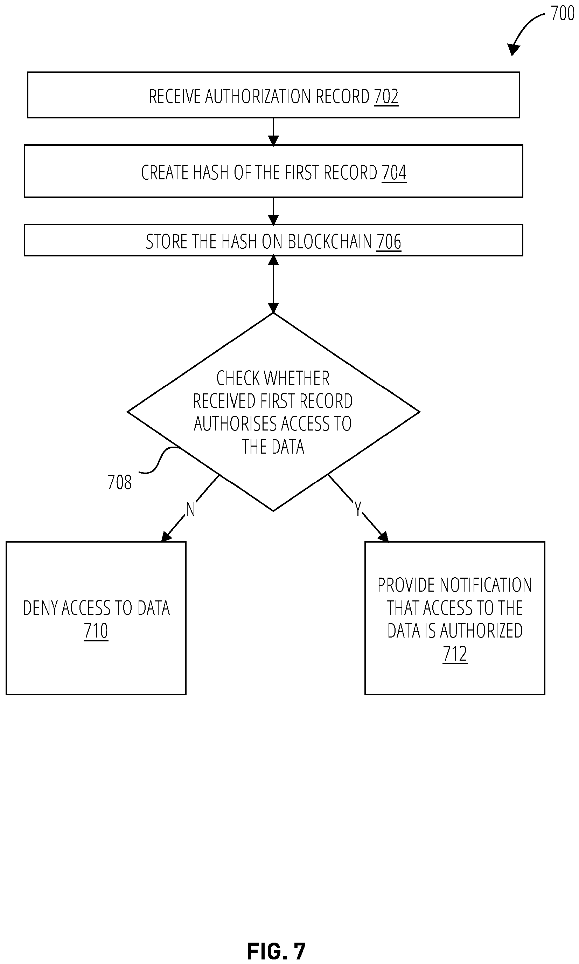

The process in relation to user authorisation is outlined further below in relation to FIG. 7.

FIG. 7 depicts a process 700 for controlling and monitoring access to user data between the data owner and a third party via data processing hub 108. In step 702, the first record (comprising an indication of whether authorization to access data belonging to the data owner is to be granted) is received from the user device 110b at hub API 122. This indication has been provided in response to a request from a third party at third party user device 110a for access to the data belonging to the data owner. The hub API 122 generates a hash of the first record which is then transmitted to the blockchain server 102 and stored in blockchain storage 104. The blockchain ID thus generated is returned to hub API 122 is stored along with the hash of the first record in hub storage 114. In decision block 708, it is checked by the hub API 122 whether the received first record includes an indication to authorise access to the data. If this is affirmed in step 712, then notification of the access is provided to the third party user device 110a. If decision block 708 is not affirmed then a flag is set which denies access to the data by the third party user device 110a.

The present invention has been described above by way of example only. It will be appreciated that modifications are possible within the scope of the appended claims.

## Claims

1. A method (500) of receiving and communicating data using a data processing hub (108), the data processing hub comprising a processor, the method being performed by the processor and comprising the steps of:
receiving a first set of user data from a first data repository (112), the first set of user data having been requested by a data owner, who owns the user data themselves, wherein the first set of user data includes a repository user identifier (502);
retrieving a globally unique user identifier, GUID, of the data owner from a user data storage (124) based on the repository user identifier;
removing the repository user identifier in the first set of the user data to generate a second set of the user data (504);
creating a hash of the second set of user data (506);
retrieving, from a hub storage (114), blockchain IDs that are associated with the GUID of the data owner and using the blockchain IDs to retrieve a hash of a third set of user data from the hub storage (114) or blockchain storage (104);
if the hash of the third set of user data is retrieved from hub storage (114), validating that the retrieved hash of the third set of user data from the hub storage is identical to a hash of the third set of user data from the blockchain storage (104);
comparing the hash of the second set of user data to the retrieved hash of the third set of user data (510); and,
in the event that the hash of the second set of user data is identical to
the retrieved hash of the third set of user data (512), communicating the first set of user data to the data owner (516).

2. The method of claim 1, further comprising the steps of:
receiving, from the data owner, a request for the first set of user data; and
relaying the request for the first set of user data to the first data repository (112).

3. The method of claim 2, wherein the receiving a request for the first set of user data comprises receiving a token indicative of the identity of the data owner making the request.

4. The method of claim 2 or claim 3, wherein the request for the first set of user data comprises a hub user identifier.

5. The method of claim 4, wherein the data processing hub comprises a database linking the hub user identifier with the repository user identifier, and optionally, wherein the database is encrypted.

6. The method of any preceding claim, wherein the removing of the repository user identifier in the first set of the user data to generate a second set of the user data further comprises adding the GUID.

7. The method of claim 6 when dependent on claim 4 or claim 5, wherein GUID comprises a function of the hub user identifier.

8. The method of claim 7 when dependent on claim 3, wherein the GUID further comprises a function of the token.

9. The method of any preceding claim, wherein in the event that the hash of the second set of user data is not identical to the hash of the third set of user data, further comprising the step of:
providing an indication that the records are not identical, and optionally,
providing the indication that the records are not identical to the data owner making the request for the first set of user data.

10. A data processing hub (108) comprising a processor configured to execute the steps of any one of claims 1 to 9.

11. A computer-readable medium comprising instructions that, when executed, cause a processor to perform the method of one of claims 1 to 9.

## Patentansprüche

1. Verfahren (500) zum Empfangen und Kommunizieren von Daten unter Verwendung eines Datenverarbeitungs-Hubs (108), wobei der Datenverarbeitungs-Hub einen Prozessor enthält, wobei das Verfahren durch den Prozessor ausgeführt wird und die folgenden Schritte umfasst:
Empfangen (502) einer ersten Menge von Anwenderdaten von einem ersten Datenlager (112), wobei die erste Menge von Anwenderdaten von einem Dateneigentümer, dem die Anwenderdaten selbst gehören, angefordert worden ist, wobei die erste Menge von Anwenderdaten eine Lager-Anwenderkennung enthält;
Abrufen einer global eindeutigen Anwenderkennung, GUID, des Dateneigentümers von einem Anwenderdatenspeicher (124) anhand der Lager-Anwenderkennung;
Entfernen (504) der Lager-Anwenderkennung in der ersten Menge der Anwenderdaten, um eine zweite Menge von Anwenderdaten zu erzeugen;
Erzeugen (506) eines Hash der zweiten Menge von Anwenderdaten;
Abrufen von einem Hub-Speicher (114) von Blockchain-Kennungen, die der GUID des Dateneigentümers zugeordnet sind, und Verwenden der Blockchain-Kennungen, um einen Hash einer dritten Menge von Anwenderdaten von dem Hub-Speicher (114) oder von einem Blockchain-Speicher (104) abzurufen;
falls der Hash der dritten Menge von Anwenderdaten von dem Hub-Speicher (114) abgerufen wird, Validieren, dass der abgerufene Hash der dritten Menge von Anwenderdaten von dem Hub-Speicher mit einem Hash der dritten Menge von Anwenderdaten von dem Blockchain-Speicher (104) übereinstimmt;
Vergleichen (510) des Hash der zweiten Menge von Anwenderdaten mit dem abgerufenen Hash der dritten Menge von Anwenderdaten; und
falls der Hash der zweiten Menge von Anwenderdaten mit dem abgerufenen Hash der dritten Menge von Anwenderdaten übereinstimmt (512), Kommunizieren der ersten Menge von Anwenderdaten an den Dateneigentümer (516) .

2. Verfahren nach Anspruch 1, das ferner die folgenden Schritte umfasst:
Empfangen von dem Dateneigentümer einer Anforderung der ersten Menge von Anwenderdaten; und
Weiterleiten der Anforderung der ersten Menge von Anwenderdaten zu dem ersten Datenlager (112).

3. Verfahren nach Anspruch 2, wobei das Empfangen einer Anforderung der ersten Menge von Anwenderdaten das Empfangen eines Tokens, das die Kennung des Dateneigentümers, der die Anforderung stellt, umfasst.

4. Verfahren nach Anspruch 2 oder Anspruch 3, wobei die Anforderung der ersten Menge der Daten eine Hub-Anwenderkennung enthält.

5. Verfahren nach Anspruch 4, wobei der Datenverarbeitungs-Hub eine Datenbank enthält, die die Hub-Anwenderkennung mit der Lager-Anwenderkennung verknüpft, wobei die Datenbank optional verschlüsselt ist.

6. Verfahren nach einem vorhergehenden Ansprüche, wobei das Entfernen der Lager-Anwenderkennung aus der ersten Menge von Anwenderdaten, um eine zweite Menge von Anwenderdaten zu erzeugen, ferner das Hinzufügen der GUID umfasst.

7. Verfahren nach Anspruch 6, wenn abhängig von Anspruch 4 oder 5, wobei die GUID eine Funktion der Hub-Anwenderkennung enthält.

8. Verfahren nach Anspruch 7, wenn abhängig von Anspruch 3, wobei die GUID ferner eine Funktion des Tokens enthält.

9. Verfahren nach einem vorhergehenden Anspruch, das in dem Fall, in dem der Hash der zweiten Menge von Anwenderdaten nicht mit dem Hash der dritten Menge von Anwenderdaten übereinstimmt, ferner den folgenden Schritt umfasst:
Bereitstellen einer Angabe, dass die Aufzeichnungen nicht übereinstimmen, und optional
Bereitstellen der Angabe, dass die Aufzeichnungen nicht übereinstimmen, für den Dateneigentümer, der die Anforderung der ersten Menge von Anwenderdaten stellt.

10. Datenverarbeitungs-Hub (108), der einen Prozessor enthält, der konfiguriert ist, die Schritte nach einem der Ansprüche 1 bis 9 auszuführen.

11. Computerlesbares Medium, das Anweisungen enthält, die dann, wenn sie ausgeführt werden, einen Prozessor dazu veranlassen, das Verfahren nach einem der Ansprüche 1 bis 9 auszuführen.

## Revendications

1. Procédé (500) de réception et de communication de données en utilisant un centre de traitement de données (108), le centre de traitement de données comprenant un processeur, le procédé étant réalisé par le processeur et comprenant les étapes de :
réception d'un premier ensemble de données d'utilisateur en provenance d'un premier stockage de référence de données (112), le premier ensemble de données d'utilisateur ayant été demandé par un propriétaire de données qui est le propriétaire des données d'utilisateur elles-mêmes, dans lequel le premier ensemble de données d'utilisateur inclut un identifiant d'utilisateur de stockage de référence (502) ;
extraction d'un identifiant d'utilisateur globalement unique, GUID, du propriétaire de données à partir d'un stockage de données d'utilisateur (124) sur la base de l'identifiant d'utilisateur de stockage de référence ;
suppression de l'identifiant d'utilisateur de stockage de référence dans le premier ensemble des données d'utilisateur pour générer un deuxième ensemble des données d'utilisateur (504) ;
création d'une empreinte numérique du deuxième ensemble de données d'utilisateur (506) ;
extraction, à partir d'un stockage de centre (114), d'ID de blockchain qui sont associés au GUID du propriétaire de données et utilisation des ID de blockchain pour extraire une empreinte numérique d'un troisième ensemble de données d'utilisateur à partir du stockage de centre (114) ou du stockage de blockchain (104) ;
si l'empreinte numérique du troisième ensemble de données d'utilisateur est extraite à partir du stockage de centre (114), validation du fait que l'empreinte numérique extraite du troisième ensemble de données d'utilisateur en provenance du stockage de centre est identique à une empreinte numérique du troisième ensemble de données d'utilisateur en provenance du stockage de blockchain (104) ;
comparaison de l'empreinte numérique du deuxième ensemble de données d'utilisateur avec l'empreinte numérique extraite du troisième ensemble de données d'utilisateur (510) ; et
dans l'éventualité où l'empreinte numérique du deuxième ensemble de données d'utilisateur est identique à l'empreinte extraite du troisième ensemble de données d'utilisateur (512), communication du premier ensemble de données d'utilisateur au propriétaire de données (516) .

2. Procédé selon la revendication 1, comprenant en outre les étapes de :
réception, en provenance du propriétaire de données, d'une demande du premier ensemble de données d'utilisateur ; et
relais de la demande du premier ensemble de données d'utilisateur sur le premier stockage de référence de données (112).

3. Procédé selon la revendication 2, dans lequel la réception d'une demande du premier ensemble de données d'utilisateur comprend la réception d'un jeton indicatif de l'identité du propriétaire de données formulant la demande.

4. Procédé selon la revendication 2 ou la revendication 3, dans lequel la demande du premier ensemble de données d'utilisateur comprend un identifiant d'utilisateur de centre.

5. Procédé selon la revendication 4, dans lequel le centre de traitement de données comprend une base de données qui lie l'identifiant d'utilisateur de centre à l'identifiant d'utilisateur de stockage de référence et en option, dans lequel la base de données est cryptée.

6. Procédé selon l'une quelconque des revendications précédentes, dans lequel la suppression de l'identifiant d'utilisateur de stockage de référence dans le premier ensemble des données d'utilisateur pour générer un deuxième ensemble des données d'utilisateur comprend en outre l'ajout du GUID.

7. Procédé selon la revendication 6 lorsqu'elle dépend de la revendication 4 ou de la revendication 5, dans lequel le GUID comprend une fonction de l'identifiant d'utilisateur de centre.

8. Procédé selon la revendication 7 lorsqu'elle dépend de la revendication 3, dans lequel le GUID comprend en outre une fonction du jeton.

9. Procédé selon l'une quelconque des revendications précédentes, dans lequel, dans l'éventualité où l'empreinte numérique du deuxième ensemble de données d'utilisateur n'est pas identique à l'empreinte numérique du troisième ensemble de données d'utilisateur, comprenant en outre l'étape de :
fourniture d'une indication du fait que les enregistrements ne sont pas identiques, et en option
fourniture de l'indication du fait que les enregistrements ne sont pas identiques au propriétaire de données formulant la demande du premier ensemble de données d'utilisateur.

10. Centre de traitement de données (108) comprenant un processeur configuré pour exécuter les étapes selon l'une quelconque des revendications 1 à 9.

11. Support lisible par ordinateur comprenant des instructions qui, lorsqu'elles sont exécutées, forcent un processeur à réaliser le procédé selon l'une quelconque des revendications 1 à 9.
